# EUROPÄISCHE PATENTSCHRIFT

(11) **EP 4 512 667 B1**
(45) Veröffentlichungstag und Bekanntmachung des Hinweises auf die Patenterteilung: **18.11.2026**
(21) Anmeldenummer: 24187431.2
(22) Anmeldetag: 09.07.2024
(51) Int. Cl.: B60R 9/04, B60R 9/058, B60R 9/06

(54) **BEFESTIGUNGSSYSTEM FÜR EINEN LASTENTRÄGER**
FASTENING SYSTEM FOR A LOAD CARRIER
SYSTÈME DE FIXATION POUR UN SUPPORT DE CHARGE

(30) Priorität: 25.08.2023 DE 102023122844
(43) Veröffentlichungstag der Anmeldung: 26.02.2025
(73) Patentinhaber: BOS Technology Services GmbH, 73760 Ostfildern (DE)
(72) Erfinder: Sang, Johannes, 55278 Undenheim (DE); Reichel, Johannes, 34289 Zierenberg (DE)
(74) Vertreter: Patentanwälte Ruff, Wilhelm, Beier, Dauster & Partner mbB

(56) Entgegenhaltungen:
- EP-B1- 3 659 865
- DE-A1- 102009 007 744

## Beschreibung

Die Erfindung betrifft ein Befestigungssystem für einen Lastenträger, aufweisend ein Basisteil mit einer hinterschnittenen Verriegelungsnut und ein Befestigungsteil mit wenigstens einem beweglichen Verriegelungselement, das zum formschlüssigen Zusammenwirken mit der Verriegelungsnut eingerichtet ist, um das Befestigungsteil an dem Basisteil zu befestigen.

Solche Befestigungssysteme sind aus dem Stand der Technik bekannt, wobei als Basisteil oftmals längserstreckte Trägerschienen oder Trägerplatten verwendet werden, in welche die hinterschnittene Verriegelungsnut eingebracht ist. Als bewegliches Verriegelungselement werden oftmals Hammermuttern oder Nutensteine verwendet, die zum formschlüssigen Zusammenwirken mit der Verriegelungsnut eingerichtet sind. Bei den bekannten Lösungen erfordert die Befestigung des Befestigungsteils an dem Basisteil den Einsatz von Werkzeug durch einen Benutzer. Dies erschwert die Benutzung und kostet Zeit.

Aus der DE 10 2009 007 744 A1 ist ein Dachlastenträger für Fahrzeuge gemäß dem Oberbegriff des Anspruchs 1 bekannt mit zwei längs des Fahrzeugdachs fest angebrachten Längsträgern und einem dazwischen angeordneten Querträger. Der Querträger besteht aus einem Profilrohr und an dessen Enden verschieblich angebrachten Stützfüßen. Jeder Stützfuß ist mit einem Riegel zur lösbaren Befestigung am Längsträger sowie mit einer Klemmeinrichtung ausgestattet, deren Klemmelement gegen das Profilrohr gedrückt werden kann. Zudem ist ein Getriebeelement vorgesehen, das gleichzeitig den Riegel und das Klemmelement betätigt.

Aus der EP 3 659 865 B1 ist ein System zur lösbaren Befestigung einer Dachbox für ein Fahrzeug bekannt. Das System weist Greifmittel mit einem Greifer auf, der an einer Querstange des Fahrzeugs befestigbar ist. Der Greifer weist einen ersten und einen zweiten Schieber auf, die zum Befestigen des Greifers an der Querstange relativ zueinander beweglich sind. Das System weist zudem einen Hebelanordnung auf, die mit einem der beiden Schieber verbunden und zum Bewegen desselben eingerichtet ist.

Aufgabe der Erfindung ist es, ein Befestigungssystem der eingangs genannten Art bereitzustellen, das eine einfache und zuverlässige Befestigung des Befestigungsteils an dem Basisteil ermöglicht.

Diese Aufgabe wird durch das Bereitstellen eines Befestigungssystems mit den Merkmalen des Anspruchs 1 gelöst. Erfindungsgemäß ist vorgesehen, dass das Befestigungsteil einen

Kniehebelmechanismus aufweist, der das Verriegelungselement in Form eines Verriegelungshebels umfasst, wobei der Verriegelungshebel in einer Bewegungsebene des Kniehebelmechanismus schwenkbeweglich ist und einen Verriegelungsabschnitt zum formschlüssigen Zusammenwirken mit der Verriegelungsnut aufweist, und wobei der Kniehebelmechanismus eingerichtet ist zum Bewegen des Verriegelungsabschnitts zwischen einer Verriegelungsstellung, in welcher der Verriegelungsabschnitt in die Verriegelungsnut hineinbewegt ist und zum Befestigen des Befestigungsteils an dem Basisteil lösbar formschlüssig mit der Verriegelungsnut zusammenwirkt, und einer Freigabestellung, in welcher der Verriegelungsabschnitt aus der Verriegelungsnut herausbewegt und der Formschluss zum Lösen des Befestigungsteils von dem Basisteil aufgehoben ist. Durch die erfindungsgemäße Lösung wird eine besonders einfache und zuverlässige Befestigung des Befestigungsteils an dem Basisteil ermöglicht. Dabei erlaubt das erfindungsgemäße Befestigungssystem ein rasches Befestigen und Lösen des Befestigungsteils. Zu diesem Zweck sieht die erfindungsgemäße Lösung den Kniehebelmechanismus vor, wobei das bewegliche Verriegelungselement ein schwenkbewegliches Hebelelement, genauer: einen Verriegelungshebel, des Kniehebelmechanismus bildet. Der Kniehebelmechanismus ist vorzugsweise zur manuellen Betätigung eingerichtet, wobei für diesen Zweck ein mit dem wenigstens einen Verriegelungshebel wirkverbundener Betätigungshebel vorhanden sein kann. Es ist aber auch möglich, dass ein Antrieb zur Bewegung des Kniehebelmechanismus vorhanden ist. In beiden Fällen kann auf Werkzeug zum Befestigen und Lösen des Befestigungsteils verzichtet werden. Dies im Unterschied zu aus dem Stand der Technik bekannten Lösungen. Bei einer Ausgestaltung sind das Basisteil und das Befestigungsteil jeweils Bauteile des besagten Lastenträgers. Der Lastenträger ist vorzugsweise ein Lastenträger für ein Kraftfahrzeug, insbesondere einen Personenkraftwagen oder ein Wohnmobil. Bevorzugt ist der Lastenträger ein Heckträger zur heckseitigen Montage oder ein Dachträger zur dachseitigen Montage an dem Kraftfahrzeug. Bei einer Ausgestaltung ist das Basisteil eine längserstreckte Trägerschiene. Bei einer weiteren Ausgestaltung ist das Basisteil eine Trägerplatte. Das Befestigungsteil ist bei unterschiedlichen Ausgestaltungen unterschiedlich ausgeführt und/oder mit unterschiedlichen Funktionen versehen. Vorzugsweise ist das Befestigungsteil einer mit dem Lastenträger zu transportierenden Last zugeordnet und/oder dient zur Befestigung einer zu transportierenden Last an dem Basisteil. Es ist aber auch denkbar und möglich, dass unterschiedliche Bauteile des Lastenträgers über eine Befestigung des Befestigungsteils an dem Basisteil miteinander verbindbar sind. In der Verriegelungsstellung wirken der Verriegelungsabschnitt des Verriegelungshebels und die Verriegelungsnut formschlüssig zusammen. Der Formschluss kommt durch den Hinterschnitt der Verriegelungsnut zustande. In der Verriegelungsstellung ist wenigstens der Verriegelungsabschnitt des Verriegelungshebels in die Verriegelungsnut hineinbewegt. In der Freigabestellung ist der Verriegelungsabschnitt von dem Hinterschnitt der Verriegelungsnut gelöst und wenigstens abschnittsweise aus der Verriegelungsnut herausbewegt. Die Bewegung des Verriegelungsabschnitts zwischen der Verriegelungsstellung und der Freigabestellung erfolgt mittels des Kniehebelmechanismus. Die Bewegung des Kniehebelmechanismus erfolgt in der besagten Bewegungsebene, die bei einer Ausgestaltung quer, insbesondere orthogonal, zu einer Längsachse der Verriegelungsnut ist. Bei einer weiteren Ausgestaltung ist die Bewegungsebene parallel zu der Längsachse der Verriegelungsnut.

In Ausgestaltung der Erfindung ist der Kniehebelmechanismus in der Verriegelungsstellung überstreckt, wodurch der Verriegelungsabschnitt in der Verriegelungsstellung lösbar arretiert ist. Durch das Überstrecken des Kniehebelmechanismus in der Verriegelungsstellung kann der Verriegelungsabschnitt auf zuverlässige und konstruktiv einfache Weise arretiert und damit gegen eine ungewollte Verlagerung in die Freigabestellung gesichert werden. Auf einen gesonderten Arretierungsmechanismus zum Arretieren des Verriegelungsabschnitts in der Verriegelungsstellung kann folglich verzichtet werden. "Überstreckt" meint, dass der Kniehebelmechanismus über einen Totpunkt hinausbewegt ist, d.h. über einen Punkt, ab welchem eine weitergehende Bewegung des Kniehebelmechanismus keine weitergehende Bewegung des Verriegelungshebels in Richtung der Verriegelungsstellung bewirkt.

In weiterer Ausgestaltung der Erfindung weist der Kniehebelmechanismus einen Betätigungshebel und einen Verbindungshebel auf, die jeweils in der Bewegungsebene schwenkbeweglich sind, wobei der Betätigungshebel zur manuellen Betätigung eingerichtet und mittels des Verbindungshebels zur Bewegung des Verriegelungshebels mit dem Verriegelungshebel verbunden ist. Der Betätigungshebel erlaubt eine einfache manuelle Bedienung des Kniehebelmechanismus zum Befestigen und Lösen des Befestigungsteils von dem Basisteil. Der Verbindungshebel dient einer Übertragung der auf den Betätigungshebel wirkenden manuellen Betätigungskraft und Betätigungsbewegung auf den Verriegelungshebel. Der Betätigungshebel, der Verbindungshebel und der Verriegelungshebel sind vorzugsweise in einer gemeinsamen Ebene, nämlich der Bewegungsebene des Kniehebelmechanismus, schwenkbeweglich. Es ist aber auch möglich, dass einzelne Hebel des Kniehebelmechanismus in einer unterschiedlichen Ebene schwenkbeweglich sind. Bevorzugt ist jedoch eine Beweglichkeit in einer gemeinsamen Bewegungsebene, da hierdurch die Konstruktion des Kniehebelmechanismus einfach gehalten werden kann. Der Verbindungshebel ist einends kraft- und bewegungsübertragend mit dem Betätigungshebel verbunden und andernends kraft- und bewegungsübertragend mit dem Verriegelungshebel verbunden.

In weiterer Ausgestaltung der Erfindung ist der Betätigungshebel um eine erste Schwenkachse schwenkbeweglich und der Verriegelungshebel ist um eine zweite Schwenkachse schwenkbeweglich, wobei die erste Schwenkachse und die zweite Schwenkachse in Bezug auf das Befestigungsteil ortsfest sind, und wobei der Verbindungshebel einends relativ zu dem Betätigungshebel um eine dritte Schwenkachse schwenkbeweglich mit dem Betätigungshebel und andernends relativ zu dem Verriegelungshebel um eine vierte Schwenkachse schwenkbeweglich mit dem Verriegelungshebel verbunden ist, wobei die dritte Schwenkachse und die vierte Schwenkachse in Bezug auf das Befestigungsteil bei einer Bewegung des Kniehebelmechanismus translatorisch beweglich sind. Eine solche Gestaltung des Kniehebelmechanismus bietet konstruktive Vorteile und ist mit vergleichsweise einfachen Mitteln umsetzbar. Die erste Schwenkachse, die zweite Schwenkachse, die dritte Schwenkachse und die vierte Schwenkachse sind zueinander parallel und/oder orthogonal zu der Bewegungsebene des Kniehebelmechanismus. Die erste Schwenkachse und die zweite Schwenkachse sind in Bezug auf das Befestigungsteil ortsfest. Bei einer Bewegung des Kniehebelmechanismus verbleiben die erste Schwenkachse und die zweite Schwenkachse folglich innerhalb der Bewegungsebene ortsfest. Hierzu im Unterschied bewegen sich die dritte Schwenkachse und die vierte Schwenkachse bei einer Bewegung des Kniehebelmechanismus innerhalb der Bewegungsebene. Bei den besagten Schwenkachsen kann es sich um gegenständliche Achsen in Form eines Maschinenelements und/oder um geometrische Achsen handeln.

Weiter gemäß der Erfindung weist der Kniehebelmechanismus einen weiteren Verriegelungshebel mit einem weiteren Verriegelungsabschnitt auf, wobei der weitere Verriegelungshebel gegenläufig zu dem Verriegelungshebel schwenkbeweglich ist, und wobei die beiden Verriegelungsabschnitte in der Verriegelungsstellung mit in Querrichtung der Verriegelungsnut einander gegenüberliegenden Hinterschnitten der Verriegelungsnut lösbar formschlüssig zusammenwirken. Durch den weiteren Verriegelungshebel mit dem weiteren Verriegelungsabschnitt kann eine besonders zuverlässige Befestigung erreicht werden. Dabei kann der Verriegelungshebel auch als erster Verriegelungshebel und der weitere Verriegelungshebel als zweiter Verriegelungshebel bezeichnet werden. Entsprechendes gilt für die Verriegelungsabschnitte. In der Verriegelungsstellung wirken die beiden Verriegelungsabschnitte mit in Querrichtung der Verriegelungsnut unterschiedlichen, einander gegenüberliegenden Wandabschnitten des Basisteils - den besagten Hinterschnitten - zusammen. Bei einer Ausgestaltung ist der weitere Verriegelungshebel zwecks Schwenkbewegung in der Bewegungsebene mit dem Verriegelungshebel unmittelbar wirkverbunden. Alternativ oder zusätzlich kann der weitere Verriegelungshebel zu diesem Zweck unmittelbar mit einem/dem Verbindungshebel wirkverbunden sein. Der erste Verriegelungshebel und der zweite Verriegelungshebel sind in der Bewegungsebene zueinander gegenläufig schwenkbeweglich. Vorzugsweise werden die Verriegelungsabschnitt der beiden Verriegelungshebel bei einer Verlagerung in Richtung der Verriegelungsstellung in Bezug auf die Querrichtung der Verriegelungsnut von innen nach außen gegen den jeweiligen Hinterschnitt bewegt. Alternativ oder zusätzlich kann eine Bewegung in Tiefenrichtung der Verriegelungsnut von innen nach außen erfolgen.

In weiterer Ausgestaltung der Erfindung ist der weitere Verriegelungshebel von dem Verriegelungshebel geschleppt und um eine fünfte Schwenkachse relativ zu dem Verriegelungshebel schwenkbeweglich mit dem Verriegelungshebel verbunden. Hierdurch kann trotz des Vorhandenseins zweier Verriegelungshebel ein einfacher Aufbau des Kniehebelmechanismus beibehalten werden. Auf einen gesonderten weiteren Hebel zur Bewegung des weiteren Verriegelungshebels kann verzichtet werden. Die fünfte Schwenkachse ist bei einer Bewegung des Kniehebelmechanismus in Bezug auf das Befestigungsteil innerhalb der Bewegungsebene translatorisch beweglich. Bei der fünften Schwenkachse kann es sich um eine gegenständliche Achse in Form eines Maschinenelements und/oder um eine geometrische Achse handeln.

In weiterer Ausgestaltung der Erfindung fallen die fünfte Schwenkachse und die vierte Schwenkachse zusammen. Mit anderen Worten ist die fünfte Schwenkachse die vierte Schwenkachse und umgekehrt. Hierdurch kann ein nochmals vereinfachter Aufbau des Kniehebelmechanismus und damit des gesamten Befestigungssystems erreicht werden.

In weiterer Ausgestaltung der Erfindung ist der weitere Verriegelungshebel um eine sechste Schwenkachse schwenkbeweglich, wobei die sechste Schwenkachse in Bezug auf das Befestigungsteil ortsfest ist, und wobei der weitere Verriegelungshebel entlang seiner Längsachse relativ zu der sechsten Schwenkachse begrenzt translatorisch beweglich an der sechsten Schwenkachse gelagert ist. Durch die begrenzte Beweglichkeit des weiteren Verriegelungshebels entlang seiner Längsachse kann eine vorteilhafte und funktionsgerechte Kinematik des Kniehebelmechanismus erreicht werden. Bei einer weiteren Ausgestaltung ist eine kinematisch umgekehrte Lagerung vorgesehen, bei der die sechste Schwenkachse in Bezug auf den weiteren Verriegelungshebel ortsfest ist und das Befestigungsteil eine Führungskulisse, beispielsweise in Form eines Langlochs, zur begrenzt translatorischen Führung der sechsten Schwenkachse aufweist.

In weiterer Ausgestaltung der Erfindung weist der weitere Verriegelungshebel ein Langloch zur begrenzt translatorischen Lagerung auf. Die sechste Schwenkachse greift in das Langloch ein.

Das Langloch ist entlang der Längsachse des weiteren Verriegelungshebels längserstreckt. Bei einer weiteren Ausgestaltung ist die sechste Schwenkachse, insbesondere in Form eines Bolzens oder Pins, an dem weiteren Verriegelungshebel angeordnet und das Befestigungsteil weist ein Langloch zur begrenzt translatorischen Lagerung auf, in welches die sechste Schwenkachse eingreift.

In weiterer Ausgestaltung der Erfindung weist das Befestigungsteil ein Gehäuse auf, in welchem der Kniehebelmechanismus gelagert ist. Durch die Lagerung in dem Gehäuse kann einer Verschmutzung und Beschädigung des Kniehebelmechanismus vorgebeugt werden. Vorzugsweise ist der Verriegelungsabschnitt des wenigstens einen Verriegelungshebels in der Verriegelungsstellung aus dem Gehäuse herausbewegt. In der Freigabestellung ist der Verriegelungsabschnitt weniger weit herausbewegt oder, vorzugsweise vollständig, in das Gehäuse hineinbewegt. Sofern der Kniehebelmechanismus einen Betätigungshebel aufweist, ist dieser vorzugsweise wenigstens abschnittsweise an einer Außenseite des Gehäuses angeordnet und auf diese Weise für den Benutzer einfach und ergonomisch zugänglich.

In weiterer Ausgestaltung der Erfindung weist das Gehäuse eine Anlagefläche zur Anlage an dem Basisteil auf, wobei der Verriegelungsabschnitt des wenigstens einen Verriegelungshebels in der Verriegelungsstellung aus dem Gehäuse herausbewegt ist und in Normalenrichtung der Anlagefläche über die Anlagefläche hinwegragt und in der Freigabestellung in das Gehäuse hineinbewegt ist und nicht oder weniger weit über die Anlagefläche hinausragt. Die Anlagefläche dient als Anschlag bei der Positionierung des Befestigungsteils an dem Basisteil. Sofern der Kniehebelmechanismus einen weiteren Verriegelungshebel aufweist, gilt das zur Anordnung des Verriegelungsabschnitts in Bezug auf die Anlagefläche Gesagte, mutatis mutandis, auch für den weiteren Verriegelungsabschnitt.

In weiterer Ausgestaltung der Erfindung weist das Gehäuse einen Positioniervorsprung auf, der zur Positionierung des Befestigungsteils an dem Basisteil in die Verriegelungsnut eingreift. Der Eingriff erfolgt in Tiefenrichtung der Verriegelungsnut. Der Positioniervorsprung erlaubt eine vereinfachte Positionierung des Befestigungsteils und damit auch des wenigstens einen Verriegelungsabschnitts in Bezug auf die Verriegelungsnut. Hierdurch kann gewährleistet werden, dass der Verriegelungsabschnitt bei der Bewegung des Kniehebelmechanismus ordnungsgemäß mit der Verriegelungsnut in Eingriff gelangt.

In weiterer Ausgestaltung der Erfindung ist das Basisteil eine längserstreckte Trägerschiene, wobei das Gehäuse einen Hakenabschnitt aufweist, der zum Einhaken an einem Außenumfang der Trägerschiene eingerichtet ist. Eine Innenumfangsfläche des Hakenabschnitts liegt in befestigtem Zustand des Befestigungsteils an einem Außenumfang der Trägerschiene an. Die Innenumfangsfläche fungiert als Anlagefläche, wobei zur Beweglichkeit des Verriegelungsabschnitts des wenigstens einen Verriegelungshebels in Bezug auf die Anlagefläche/die Innenumfangsfläche des Hakenabschnitts das zu der vorhergehenden Ausgestaltung Offenbarte sinngemäß gilt.

Die Erfindung betrifft zudem einen Lastenträger für ein Fahrzeug mit einem Befestigungssystem gemäß der vorhergehenden Beschreibung. Vorzugsweise ist der Lastenträger für ein Kraftfahrzeug vorgesehen, insbesondere einen Personenkraftwagen oder ein Wohnmobil. Bei einer Ausgestaltung ist der Lastenträger ein Heckträger zur Montage an einem Fahrzeugheck. Bei einer weiteren Ausgestaltung ist der Lastenträger ein Dachträger zur Montage auf einem Fahrzeugdach. Der Lastenträger ist grundsätzlich zum Tragen einer mittels des Fahrzeugs zu transportierenden Last vorgesehen. Vorzugsweise handelt es sich bei der zu transportierenden Last um ein Fahrrad, wobei der Lastenträger folglich vorzugsweise ein Fahrradträger ist.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in schematisch vereinfachter Darstellung einen Lastenträger mit einem Befestigungssystem, das ein Basisteil mit einer hinterschnittenen Verriegelungsnut und ein Befestigungsteil mit einem Kniehebelmechanismus aufweist,
- Fig. 2, 3, 4: schematische Schnittansichten zur weiteren Verdeutlichung des Aufbaus und der Funktionsweise des Befestigungssystems, wobei das Befestigungssystem/der Kniehebelmechanismus eine Freigabestellung (Fig. 2, 3) und eine Verriegelungsstellung einnimmt (Fig. 4),
- Fig. 5: eine Ausführungsform eines erfindungsgemäßen Befestigungssystems, bei dem ein Gehäuse des Befestigungsteils einen Hakenabschnitt aufweist,
- Fig. 6: eine schematische Schnittansicht zur weiteren Verdeutlichung des Aufbaus und der Funktionsweise des Befestigungssystems nach Fig. 5,
- Fig. 7: in schematischer Perspektivansicht das Befestigungsteil des Befestigungssystems nach den Fig. 5 und 6, und
- Fig. 8, 9, 10: perspektivische Ansichten weiterer Ausführungsformen erfindungsgemäßer Befestigungsteile mit jeweils einem Kniehebelmechanismus, wobei die Befestigungsteile unterschiedlich gestaltet sind und zur Befestigung unterschiedlicher Lasten an einem/dem Lastenträger dienen.

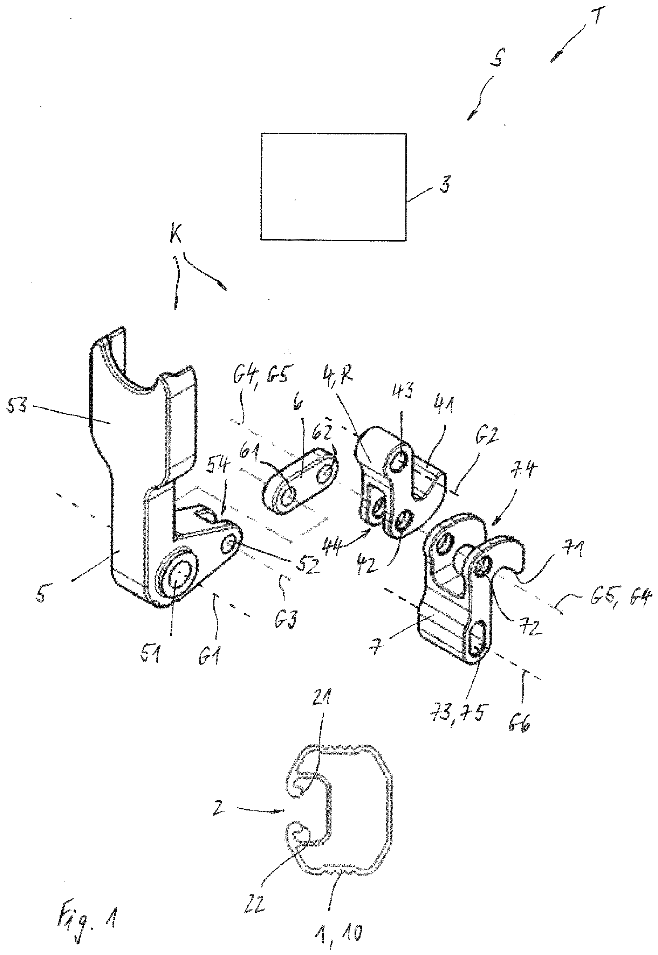

Gemäß den Fig. 1 bis 4 weist ein Befestigungssystem S ein Basisteil 1 und ein Befestigungsteil 3 auf. Das Befestigungssystem ist in Fig. 1 schematisch und in teilweise explodierter Ansicht dargestellt, wobei insbesondere das Befestigungsteil 3 in Fig. 1 als generischer Platzhalter für unterschiedliche Ausgestaltungen zu verstehen ist.

Das Befestigungssystem S ist zur Verwendung mit einem Lastenträger T vorgesehen. Bei dem Lastenträger T handelt es sich vorliegend um einen zur Montage an einem Fahrzeug eingerichteten Lastenträger. Der Lastenträger T ist bei der gezeigten Ausführungsform zur heck- oder dachseitigen Montage an einem Personenkraftwagen vorgesehen, so dass auch von einem Heckträger oder Dachträger gesprochen werden kann. Mittels des Lastenträgers T können unterschiedliche Lasten transportiert werden, insbesondere Fahrräder, eine Dachbox oder dergleichen. Das Befestigungssystem S dient der Befestigung der zu transportierenden Last an dem Lastenträger T. Alternativ oder zusätzlich können unterschiedliche, vorliegend nicht im Detail gezeigte Bauteile des Lastenträgers T mittels des Befestigungssystems S aneinander befestigt werden.

Das Basisteil 1 weist eine hinterschnittene Verriegelungsnut 2 auf und ist in den Fig. 1 bis 4 in einem schematischen Querschnitt dargestellt. Bei der gezeigten Ausführungsform ist das Basisteil 1 eine längserstreckte Trägerschiene 10. Die Verriegelungsnut 2 ist in Längsrichtung der Trägerschiene 10 längserstreckt. Die Verriegelungsnut 2 ist hinterschnitten und weist vorliegend zwei in Querrichtung der Verriegelungsnut 2 einander gegenüberliegende Hinterschnitte 21, 22 auf, die auch als erster Hinterschnitt 21 und zweiter Hinterschnitt 22 bezeichnet werden können. Die Verriegelungsnut 2 mitsamt ihrer Hinterschnitte 21, 22 ist vorzugsweise über eine gesamte Länge der Trägerschiene 10 längserstreckt. Die Trägerschiene 10 ist in einem betriebsfertig montierten Zustand an einer vorliegend nicht gezeigten Stützstruktur des Lastenträgers T befestigt. Die Stützstruktur kann beispielsweise an dem Fahrzeugheck oder dem Fahrzeugdach abgestützt und befestigt sein.

Das Befestigungsteil 3 weist wenigstens ein bewegliches Verriegelungselement R auf, das zum formschlüssigen Zusammenwirken mit der hinterschnittenen Verriegelungsnut 2 eingerichtet ist. Durch die Verriegelung des beweglichen Verriegelungselements R an der Verriegelungsnut 2 kann das Befestigungsteil 3 lösbar an dem Basisteil befestigt werden.

Um eine möglichst einfache, zuverlässige und werkzeuglose lösbare Befestigung des Befestigungsteils 3 an dem Basisteil 2 zu ermöglichen, weist das Befestigungsteil 3 einen Kniehebelmechanismus K auf, der das Verriegelungselement R in Form eines Verriegelungshebels 4 umfasst.

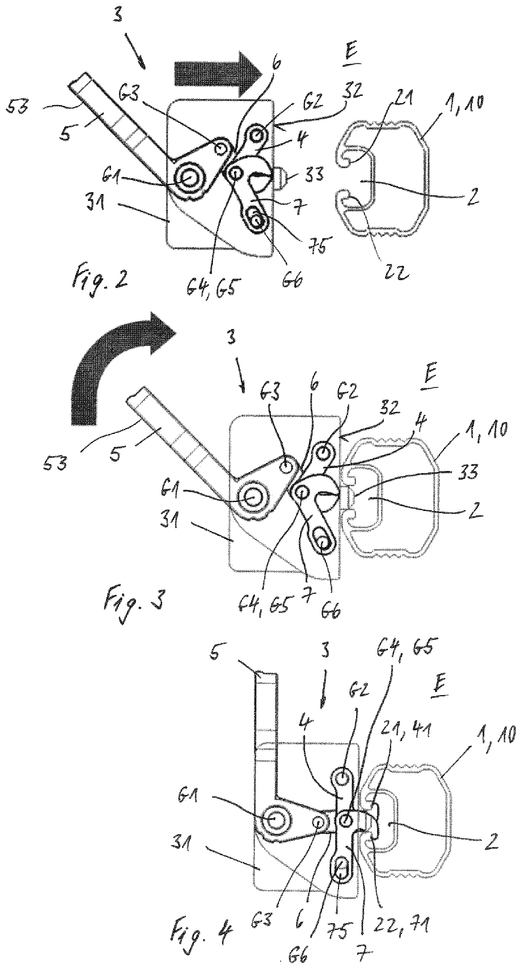

Der Verriegelungshebel 4 ist in einer Bewegungsebene E (siehe Fig. 2, 3, 4) des Kniehebelmechanismus K schwenkbeweglich und weist einen Verriegelungsabschnitt 41 auf. Der Verriegelungsabschnitt 41 ist zum formschlüssigen Zusammenwirken mit der hinterschnittenen Verriegelungsnut 2 eingerichtet. Der Kniehebelmechanismus K dient der Bewegung des Verriegelungsabschnitts 41 zwischen einer Verriegelungsstellung (siehe Fig. 4) und einer Freigabestellung (siehe Fig. 2, 3).

In der Verriegelungsstellung ist der Verriegelungsabschnitt 41 in die Verriegelungsnut 2 hineinbewegt und wirkt zur Befestigung des Befestigungsteils 3 an dem Basisteil 1 lösbar formschlüssig mit der Verriegelungsnut 2 zusammen. In der Freigabestellung ist der Verriegelungsabschnitt 41 aus der Verriegelungsnut 2 wenigstens abschnittsweise herausbewegt und der Formschluss ist zum Lösen des Befestigungsteils 3 von dem Basisteil 1 aufgehoben. Das Hineinbewegen und Herausbewegen des Verriegelungsabschnitts 41 erfolgt mittels einer Bewegung des Kniehebelmechanismus K.

Der Kniehebelmechanismus K weist zudem einen weiteren Verriegelungshebel 7 auf, der mit einem weiteren Verriegelungsabschnitt 71 versehen ist. Der Verriegelungshebel 4 und der weitere Verriegelungshebel 7 können auch als erster Verriegelungshebel 4 und zweiter Verriegelungshebel 7 bezeichnet werden. Entsprechendes gilt für die beiden Verriegelungsabschnitte 41, 71. Der zweite Verriegelungshebel 7 ist gegenläufig zu dem ersten Verriegelungshebel 4 in der Bewegungsebene E schwenkbeweglich.

In der Verriegelungsstellung wirkt der erste Verriegelungsabschnitt 41 formschlüssig mit dem ersten Hinterschnitt 21 zusammen und der zweite Verriegelungsabschnitt 71 wirkt formschlüssig mit dem zweiten Hinterschnitt 22 zusammen. Die Bewegung der Verriegelungsabschnitte 41,71 erfolgt in einer Querschnittsebene des Basisteils 1 und/oder der Verriegelungsnut. Mit anderen Worten ist in befestigtem Zustand des Befestigungsteils 3 die Bewegungsebene E des Kniehebelmechanismus K parallel zu einer Querebene der Verriegelungsnut 2.

Bei einer Bewegung in Richtung der Verriegelungsstellung werden die Verriegelungsabschnitte 41, 71 bei der gezeigten Ausführungsform in Tiefenrichtung der Verriegelungsnut 2 - die vorliegend in Bezug auf die Zeichenebene der Fig. 1 bis 4 horizontal verläuft - in die Verriegelungsnut 2 hineinbewegt. Gleichzeitig erfolgt eine gegenläufige Bewegung der Verriegelungsabschnitte 41, 71 entlang der Querrichtung der Verriegelungsnut 2, die vorliegend vertikal in der Zeichenebene der Fig. 1 bis 4 verläuft. Dabei wird der erste Verriegelungsabschnitt 41 nach oben und der zweite Verriegelungsabschnitt 71 nach unten verlagert.

Bei einer weiteren in den Figuren nicht gezeigten Ausführungsform ist die Bewegungsebene des Kniehebelmechanismus parallel zur Längsrichtung der Verriegelungsnut. Um bei einer solchen Ausrichtung der Bewegungsebene dennoch ein Hineinbewegen des wenigstens einen Verriegelungsabschnitts in die hinterschnittene Verriegelungsnut zu ermöglichen, weist letztere vorzugsweise eine Ausnehmung auf, in deren Bereich keine Hinterschnitte vorhanden sind, so dass ein Eintauchen des Verriegelungsabschnitts in die Verriegelungsnut möglich ist.

Bei der gezeigten Ausführungsform weist der Kniehebelmechanismus K zudem einen Betätigungshebel 5 und einen Verbindungshebel 6 auf. Der Betätigungshebel 5 und der Verbindungshebel 6 sind jeweils in der Bewegungsebene E schwenkbeweglich. Der Betätigungshebel 5 ist zur manuellen Betätigung eingerichtet und mittels des Verbindungshebels 6 zur Bewegung der beiden Verriegelungsabschnitte 41, 71 mit den beiden Verriegelungshebeln 4, 7 mechanisch wirkverbunden. Dabei dient der Verbindungshebel 6 der Übertragung von manuell auf den Betätigungshebel 6 aufgebrachten Betätigungskräften und/oder -bewegungen auf die beiden Verriegelungshebel 4, 7 und damit auf deren Verriegelungsabschnitte 41, 71.

Der Betätigungshebel 5 ist um eine erste Schwenkachse G1 in der Bewegungsebene E schwenkbeweglich. Der Verbindungshebel 6 ist um eine zweite Schwenkachse G2 in der Bewegungsebene E schwenkbeweglich. Dabei sind die erste Schwenkachse G1 und die zweite Schwenkachse G2 in Bezug auf das Befestigungsteil 3 ortsfest, so dass bei einer Bewegung des Kniehebelmechanismus K jedenfalls keine translatorische Bewegung der besagten Schwenkachsen G1, G2 erfolgt.

Der Verbindungshebel 6 ist einends relativ zu dem Betätigungshebel 5 um eine dritte Schwenkachse G3 schwenkbeweglich mit dem Betätigungshebel 5 verbunden. Andernends ist der Verbindungshebel 6 relativ zu dem ersten Verriegelungshebel 4 um eine vierte Schwenkachse G4 schwenkbeweglich mit dem ersten Verriegelungshebel 4 verbunden. Die dritte Schwenkachse G3 und die vierte Schwenkachse G4 sind bei einer Bewegung des Kniehebelmechanismus translatorisch beweglich. Mit anderen Worten bewegen sich die dritte Gelenkachse G3 und die vierte Gelenkachse G4 innerhalb der Bewegungsebene E.

Die erste Schwenkachse G1, die zweite Schwenkachse G2, die dritte Schwenkachse G3 und die vierte Schwenkachse G4 sind parallel und normal zu der Bewegungsebene E. Bei der in den Figuren gezeigten Ausführungsform sind die besagten Schwenkachsen G1, G2, G3, G4 folglich zudem parallel zur Längsrichtung der Verriegelungsnut 2 und damit auch des Basisteils 1 bzw. der Trägerschiene 10.

Bei der gezeigten Ausführungsform ist der zweite Verriegelungshebel 7 von dem ersten Verriegelungshebel 4 geschleppt und zu diesem Zweck um eine fünfte Schwenkachse G5 relativ zu dem ersten Verriegelungshebel 4 schwenkbeweglich mit dem ersten Verriegelungshebel 4 verbunden. Die fünfte Schwenkachse G5 ist parallel zu den vorhergehend erläuterten Schwenkachsen G1 bis G4. Zudem ist die fünfte Schwenkachse G5 bei einer Bewegung des Kniehebelmechanismus K in der Bewegungsebene E translatorisch beweglich.

Der zweite Verriegelungshebel 7 ist um eine sechste Schwenkachse G6 schwenkbeweglich an dem Befestigungsteil 3 gelagert. Zudem ist der zweite Verriegelungshebel 7 entlang seiner Längsachse (ohne Bezugszeichen) begrenzt translatorisch beweglich an der sechsten Schwenkachse G6 gelagert.

Bei der gezeigten Ausführungsform fallen die vierte Schwenkachse G4 und die fünfte Schwenkachse G5 zusammen. Die besagten Schwenkachsen G4, G5 sind folglich kollinear.

Die Schwenkachsen G1 bis G6 sind bei der gezeigten Ausführungsform durch jeweils einen in den Figuren nicht näher gezeigten Bolzen oder Stift gebildet. Die Hebel 4, 5, 6, 7 des Kniehebelmechanismus K weisen zur Aufnahme der besagten Bolzen oder Stifte entsprechende Aufnahmebohrungen auf. Kurz im Einzelnen:
Der Betätigungshebel 5 weist eine erste Aufnahmebohrung 51 und eine zweite Aufnahmebohrung 52 auf. Die erste Aufnahmebohrung 51 ist der ersten Schwenkachse G1 zugeordnet. Die zweite Aufnahmebohrung 52 ist der dritten Schwenkachse G3 zugeordnet.

Der Verbindungshebel 6 weist eine erste Aufnahmebohrung 61 und eine zweite Aufnahmebohrung 62 auf. Die erste Aufnahmebohrung 61 ist der dritten Schwenkachse G3 zugeordnet. Die zweite Aufnahmebohrung 62 ist der vierten Schwenkachse G4 und/oder der fünften Schwenkachse G5 zugeordnet.

Der erste Verriegelungshebel 4 weist eine erste Aufnahmebohrung 42 und eine zweite Aufnahmebohrung 43 auf. Die erste Aufnahmebohrung 42 ist der vierten Schwenkachse G4 und/oder der fünften Schwenkachse G5 zugeordnet. Die zweite Aufnahmebohrung 43 ist der zweiten Schwenkachse G2 zugeordnet.

Der zweite Verriegelungshebel 7 weist eine erste Aufnahmebohrung 72 und eine zweite Aufnahmebohrung 73 auf. Die erste Aufnahmebohrung 72 ist der vierten Schwenkachse G4 und/oder der fünften Schwenkachse G5 zugeordnet. Die zweite Aufnahmebohrung 73 ist der sechsten Schwenkachse G6 zugeordnet.

Bei der gezeigten Ausführungsform ist die zweite Aufnahmebohrung 73 des zweiten Verriegelungshebels 7 als Langloch 75 gestaltet. Das Langloch 75 ist in Längsrichtung des zweiten Verriegelungshebels 7 längserstreckt und ermöglicht die besagte begrenzte translatorische Beweglichkeit des zweiten Verriegelungshebels 7 in Bezug auf die sechste Schwenkachse G6.

Um eine möglichst kompakte Bauweise des Kniehebelmechanismus K und eine vorteilhafte Kraftübertragung zwischen den Hebeln 4 bis 7 des Kniehebelmechanismus K zu ermöglichen, sind diese vorliegend auf spezifische Art aneinander gelagert. Auch hierzu im Einzelnen:
Der Betätigungshebel 5 weist eine Aufnahmeaussparung 54 auf, die der Aufnahme des dem Betätigungshebel 5 zugewandten Endes des Verbindungshebels 6 dient. Dabei ist die zweite Aufnahmebohrung 52 des Betätigungshebels 5 axial durch die Aufnahmeaussparung 54 erstreckt. In aufgenommenem Zustand sind die zweite Aufnahmebohrung 52 des Betätigungshebels 5 und die erste Aufnahmebohrung 61 des Verbindungshebels 6 koaxial.

Der erste Verriegelungshebel 4 weist eine Aufnahmeaussparung 44 auf, die der Aufnahme des dem ersten Verriegelungshebel 4 zugewandten Endes des Verbindungshebels 6 dient. Die erste Aufnahmebohrung 42 des ersten Verriegelungshebels 4 ist axial durch die Aufnahmeaussparung 44 erstreckt. In aufgenommenem Zustand sind die erste Aufnahmebohrung 42 des ersten Verriegelungshebels 4 und die zweite Aufnahmebohrung 62 des Verbindungshebels 6 koaxial.

Der zweite Verriegelungshebel 7 weist eine Aufnahmeaussparung 74 auf. Die Aufnahmeaussparung 74 dient einer Aufnahme des ersten Verriegelungshebels 4. Die erste Aufnahmebohrung 72 des zweiten Verriegelungshebels 7 ist axial durch den Aufnahmeabschnitt 74 erstreckt. In aufgenommenem Zustand sind die erste Aufnahmebohrung 72 des zweiten Verriegelungshebels 7 und die erste Aufnahmebohrung 42 des ersten Verriegelungshebels 4 koaxial.

Der Kniehebelmechanismus K ist bei der gezeigten Ausführungsform in einem Gehäuse 31 des Befestigungsteils 3 gelagert und auf diese Weise vor Schmutz und Beschädigungen geschützt. Dabei ragt jedenfalls ein Betätigungsabschnitt 53 des Betätigungshebels 5 für einen Benutzer zugänglich aus dem Gehäuse 31 heraus.

Das Gehäuse 31 weist bei der gezeigten Ausführungsform eine Anlagefläche 32 auf. Die Anlagefläche 32 ist zur Anlage an dem Basisteil 1 eingerichtet.

Zur Befestigung des Befestigungsteils 3 an dem Basisteil 1 wird das Befestigungsteil 3 zunächst an das Basisteil 1 heranbewegt (siehe Fig. 2). Dabei ist die Anlagefläche 32 des Gehäuses 31 in Richtung des Basisteils 1 und im Speziellen in Richtung der Verriegelungsnut 2 ausgerichtet.

Bei der gezeigten Ausführungsform weist das Gehäuse 31 zur verbesserten Positionierung der Anlagefläche 32 einen Positioniervorsprung 33 auf. Der Positioniervorsprung 33 ragt in Normalenrichtung von der Anlagefläche 32 auf und ist hinsichtlich seines Durchmessers maßlich auf eine Breite der Verriegelungsnut 2 abgestimmt. Zur Positionierung des Befestigungsteils 3 an dem Basisteil 1 taucht der Positioniervorsprung 33 in Tiefenrichtung der Verriegelungsnut 2 in diese ein (siehe Fig. 3). Dabei liegt die Anlagefläche 32 vorliegend plan an einer Oberseite (ohne Bezugszeichen) der Verriegelungsnut 2 und/oder des Basisteils 1 an. Der Kniehebelmechanismus K ist in der in Fig. 3 gezeigten, lediglich positionierten aber nicht noch befestigten Situation noch nicht betätigt.

Zur Betätigung des Verriegelungsmechanismus K wird der Betätigungsabschnitt 53 des Betätigungshebels 5 betätigt. Die Betätigung erfolgt gemäß dem in Fig. 3 eingezeichneten Pfeil im Uhrzeigersinn um die erste Schwenkachse G1. Infolge der um die erste Schwenkachse G1 im Uhrzeigersinn gerichteten Schwenkbewegung des Betätigungshebels 5 wird der Verbindungshebel 6 unter anderem in Tiefenrichtung der Verriegelungsnut 2 bewegt. Dabei bewegt sich der Verbindungshebel 6 einends gemeinsam mit der dort angeordneten dritten Schwenkachse G3 im Uhrzeigersinn auf einer Kreisbahn um die erste Schwenkachse G1. Durch die Bewegung des Verbindungshebels 6 wird der erste Verriegelungshebel 4 entgegen dem Uhrzeigersinn um die zweite Schwenkachse G2 geschwenkt. Die Schwenkbewegung wird durch die Bewegung des Verbindungshebels 6 bewirkt, der über die vierte Gelenkachse G4 schwenkbeweglich mit dem ersten Verriegelungshebel 4 verbunden ist. Die vierte Schwenkachse G4 bewegt sich hierbei entgegen dem Uhrzeigersinn auf einer Kreisbahn um die zweite Schwenkachse G2. Infolge dieser Bewegung des ersten Verriegelungshebels 4 wird der erste Verriegelungsabschnitt 41 in Tiefenrichtung der Verriegelungsnut 2 in diese hinein und in Querrichtung nach außen bewegt. Hierdurch hintergreift der erste Verriegelungsabschnitt 41 den ersten Hinterschnitt 41 formschlüssig (siehe Fig. 4).

Der zweite Verriegelungshebel 7 wird durch die Bewegung des ersten Verriegelungshebels 4 im Uhrzeigersinn um die sechste Schwenkachse G6 bewegt. Gleichzeitig bewegt sich der zweite Verriegelungshebel 7 entlang seiner Längsrichtung relativ zu der sechsten Schwenkachse G6. Diese translatorische Ausweichbewegung des zweiten Verriegelungshebels 7 ermöglicht eine vorteilhafte und funktionsgerechte Bewegungskinematik des Kniehebelmechanismus K. Der zweite Verriegelungsabschnitt 41 wird durch die Bewegung des zweiten Verriegelungshebels 7 in Tiefenrichtung der Verriegelungsnut 2 in diese hineinbewegt und in Querrichtung nach unten verlagert. Hierdurch hintergreift der zweite Verriegelungsabschnitt 71 den zweiten Hinterschnitt 22, um formschlüssig mit diesem zusammenzuwirken.

Fig. 4 zeigt, dass der Kniehebelmechanismus K in der Verriegelungsstellung überstreckt ist. Durch diese Überstreckung sind die Verriegelungsabschnitte 41, 71 in der Verriegelungsstellung lösbar an dem jeweiligen Hinterschnitt 21, 22 arretiert. Arretiert meint, dass eine Verlagerung in Richtung der Freigabestellung (siehe Fig. 3) ausschließlich über eine Bewegung des Betätigungshebels um die erste Schwenkachse G1 entgegen dem Uhrzeigersinn möglich ist. Überstreckt meint, dass eine weitergehende Bewegung des Kniehebelmechanismus K in Richtung der Verriegelungsstellung keine weitere Bewegung der Verriegelungsabschnitte 41, 71 in die Verriegelungsnut 2 hinein bewirkt. Bei einer weitergehenden Bewegung würde stattdessen keine weitergehende oder eine kinematisch umgekehrte Bewegung der Verriegelungsabschnitte 41, 71 erfolgen. In diesem Zusammenhang kann auch von einer Totpunktlage des Kniehebelmechanismus K gesprochen werden.

Bei der gezeigten Ausführungsform sind die Verriegelungsabschnitte 41, 71 in der Freigabestellung innerhalb des Gehäuses 31 angeordnet. Die Verriegelungsabschnitte 41, 71 befinden sich folglich auf einer innenliegenden Seite der Anlagefläche 32. Bei einer Bewegung in Richtung der Verriegelungsstellung werden die Verriegelungsabschnitte 41, 71 auf eine gegenüberliegende Außenseite der Anlagefläche 32 bewegt. In der Verriegelungsstellung ragen die Verriegelungsabschnitte 41, 71 in Normalenrichtung der Anlagefläche 32 über diese hinweg.

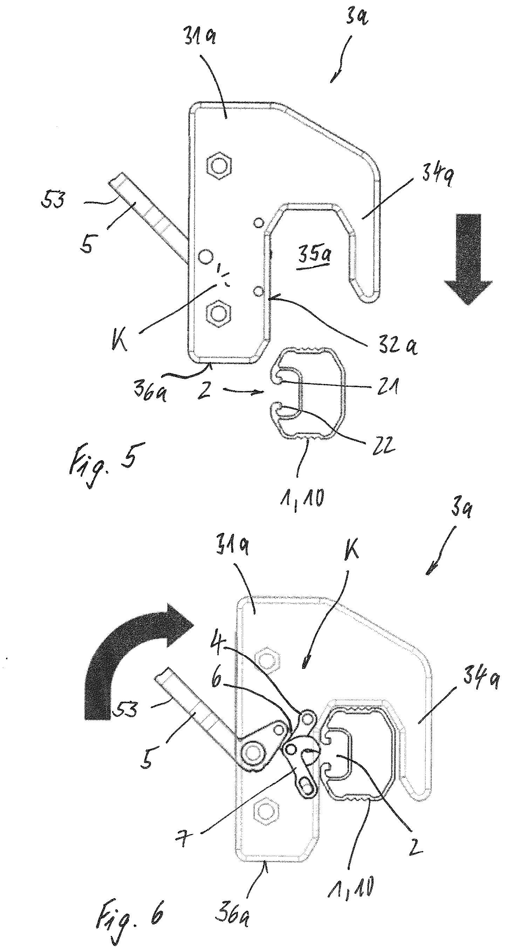

In den Fig. 5, 6 und 7 ist ein alternativ gestaltetes Befestigungsteil 3a gezeigt. Dessen Gehäuse 31a ist unterschiedlich zu dem Gehäuse 31 der Ausführungsformen nach den Fig. 1 bis 4 gestaltet. Im Übrigen sind die Funktionsweise und der Aufbau des Befestigungsteils 3a im Wesentlichen identisch zu dem Befestigungsteil 3 nach den Fig. 1 bis 4. Insbesondere weist das Befestigungsteil 3a einen identische Kniehebelmechanismus K auf.

Im Unterschied zu dem Gehäuse 31 weist das Gehäuse 31a einen Hakenabschnitt 34 auf, der eine Aufnahmeaussparung 35a umgrenzt. Der Hakenabschnitt 34a erlaubt ein Einhaken des Befestigungsteils 3a an dem Basisteil 1, das vorliegend wiederum als Trägerschiene 10 und somit identisch zu der Ausführungsform nach den Fig. 1 bis 4 gestaltet ist. In eingehaktem Zustand ist die Trägerschiene 10 in der Aufnahmeaussparung 35a angeordnet. Ein nicht näher bezeichneter Innenumfang des Hakenabschnitts 34a umgrenzt die Aufnahmeaussparung 35a und umfasst insbesondere die Anlagefläche 32a. Die Anlagefläche 32a liegt in einem an der Trägerschiene 10 positionierten Zustand des Befestigungsteils 3a wiederum an einer Oberseite der Trägerschiene 10 an. Die Positionierung ist insoweit identisch zu der vorhergehend in Zusammenhang mit der Ausführungsform nach den Fig. 1 bis 4 erläuterten Positionierung.

Das Gehäuse 31a weist einen Montageabschnitt 36a auf. Der Montageabschnitt 36a erlaubt die Montage des Befestigungsteils 3a an einem Trägerteil des Lastenträgers T oder einem sonstigen an dem Basisteil 1 zu befestigenden Teil. Das Gehäuse 31 der Ausführungsform nach den Fig. 1 bis 4 kann mit einem entsprechenden Montageabschnitt versehen sein.

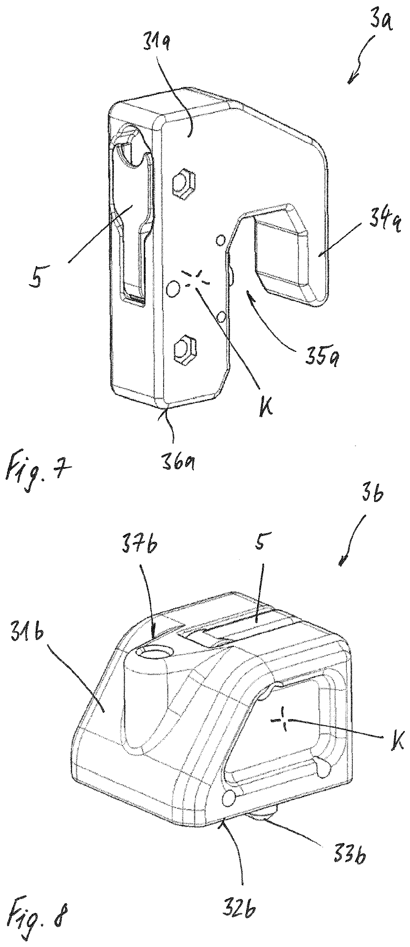

In den Fig. 8 bis 10 sind weitere alternativ gestaltete Befestigungsteile 3b, 3c, 3d gezeigt.

Bei dem Befestigungsteil 3b nach Fig. 8 weist das Gehäuse 31b einen zylindrischen Montageabschnitt 37b zur Aufnahme eines Gewindestabs oder sonstigen zylindrischen Bauteils auf.

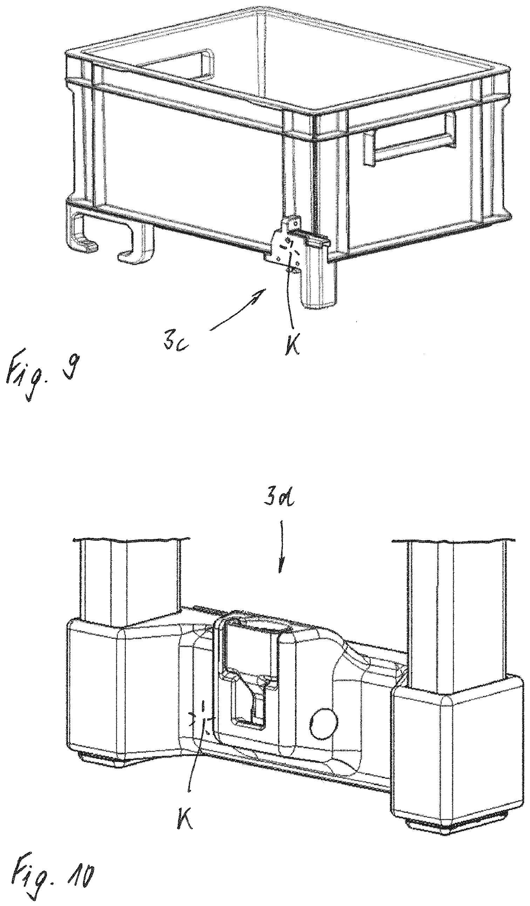

Das Befestigungsteil 3c nach Fig. 9 dient der Befestigung einer Kiste.

Das Befestigungsteil 3d nach Fig. 10 weist eine weitere unterschiedliche Gestaltung und/oder Funktion auf.

## Patentansprüche

1. Befestigungssystem (S) für einen Lastenträger (T), aufweisend
ein Basisteil (1) mit einer hinterschnittenen Verriegelungsnut (2) und
ein Befestigungsteil (3, 3a, 3b, 3c, 3d) mit wenigstens einem beweglichen Verriegelungselement (R), das zum formschlüssigen Zusammenwirken mit der Verriegelungsnut (2) eingerichtet ist, um das Befestigungsteil (3, 3a, 3b, 3c, 3d) an dem Basisteil (1) zu befestigen,
wobei das Befestigungsteil (3, 3a, 3b, 3c, 3d) einen Kniehebelmechanismus (K) aufweist, der das Verriegelungselement (R) in Form eines Verriegelungshebels (4) umfasst,
wobei der Verriegelungshebel (4) in einer Bewegungsebene (E) des Kniehebelmechanismus (E) schwenkbeweglich ist und einen Verriegelungsabschnitt (41) zum formschlüssigen Zusammenwirken mit der Verriegelungsnut (2) aufweist,
wobei der Kniehebelmechanismus (K) eingerichtet ist zum Bewegen des Verriegelungsabschnitts (41) zwischen einer Verriegelungsstellung, in welcher der Verriegelungsabschnitt (41) in die Verriegelungsnut (2) hineinbewegt und zum Befestigen des Befestigungsteils (3, 3a, 3b, 3c, 3d) an dem Basisteil (1) lösbar formschlüssig mit der Verriegelungsnut (2) zusammenwirkt, und einer Freigabestellung, in welcher der Verriegelungsabschnitt (41) aus der Verriegelungsnut (2) herausbewegt und der Formschluss zum Lösen des Befestigungsteils (3) von dem Basisteil (1) aufgehoben ist, **dadurch gekennzeichnet, dass**
der Kniehebelmechanismus (K) einen weiteren Verriegelungshebel (7) mit einem weiteren Verriegelungsabschnitt (71) aufweist, wobei der weitere Verriegelungshebel (7) gegenläufig zu dem Verriegelungshebel (4) schwenkbeweglich ist, und wobei die beiden Verriegelungsabschnitte (41, 71) in der Verriegelungsstellung mit in Querrichtung der Verriegelungsnut (2) einander gegenüberliegenden Hinterschnitten (21, 22) der Verriegelungsnut (2) lösbar formschlüssig zusammenwirken.

2. Befestigungssystem (S) nach Anspruch 1, wobei der Kniehebelmechanismus (K) in der Verriegelungsstellung überstreckt ist, wodurch der Verriegelungsabschnitt (41) in der Verriegelungsstellung lösbar arretiert ist.

3. Befestigungssystem (S) nach Anspruch 1 oder 2, wobei der Kniehebelmechanismus (K) einen Betätigungshebel (5) und einen Verbindungshebel (6) aufweist, die jeweils in der Bewegungsebene (E) schwenkbeweglich sind, wobei der Betätigungshebel (5) zur manuellen Betätigung eingerichtet und mittels des Verbindungshebels (6) zur Bewegung des Verriegelungshebels (4) mit dem Verriegelungshebel (4) wirkverbunden ist.

4. Befestigungssystem (S) nach Anspruch 3, wobei der Betätigungshebel (5) um eine erste Schwenkachse (G1) schwenkbeweglich ist und der Verriegelungshebel (4) um eine zweite Schwenkachse (G2) schwenkbeweglich ist, wobei die erste Schwenkachse (G1) und die zweite Schwenkachse (G2) in Bezug auf das Befestigungsteil (3) ortsfest sind, und wobei der Verbindungshebel (6) einends relativ zu dem Betätigungshebel (5) um eine dritte Schwenkachse (G3) schwenkbeweglich mit dem Betätigungshebel (5) und andernends relativ zu dem Verriegelungshebel (4) um eine vierte Schwenkachse (G4) schwenkbeweglich mit dem Verriegelungshebel (4) verbunden ist, wobei die dritte Schwenkachse (G3) und die vierte Schwenkachse (G4) in Bezug auf das Befestigungsteil (3) bei einer Bewegung des Kniehebelmechanismus (K) translatorisch beweglich sind.

5. Befestigungssystem (S) nach einem der vorhergehenden Ansprüche, wobei der weitere Verriegelungshebel (7) von dem Verriegelungshebel (4) geschleppt ist und um eine fünfte Schwenkachse (G5) relativ zu dem Verriegelungshebel (4) schwenkbeweglich mit dem Verriegelungshebel (4) verbunden ist.

6. Befestigungssystem (S) nach Anspruch 5 und Anspruch 4, wobei die fünfte Schwenkachse (G5) die vierte Schwenkachse (G4) ist und umgekehrt.

7. Befestigungssystem (S) nach einem der vorhergehenden Ansprüche, wobei der weitere Verriegelungshebel (7) um eine sechste Schwenkachse (G6) schwenkbeweglich ist, wobei die sechste Schwenkachse (G6) in Bezug auf das Befestigungsteil (3) ortsfest ist, und wobei der weitere Verriegelungshebel (7) entlang seiner Längsachse relativ zu der sechsten Schwenkachse (G6) begrenzt translatorisch beweglich an der sechsten Schwenkachse (G6) gelagert ist.

8. Befestigungssystem (S) nach Anspruch 7, wobei der weitere Verriegelungshebel (7) ein Langloch (75) zur begrenzt translatorischen Lagerung aufweist.

9. Befestigungssystem (S) nach einem der Ansprüche 1 bis 6, wobei der weitere Verriegelungshebel (7) um eine sechste Schwenkachse (G6) schwenkbeweglich ist, wobei die sechste Schwenkachse (G6) in Bezug auf den Verriegelungshebel (7) ortsfest ist, insbesondere wobei die sechste Schwenkachse (G6) in Form eines Bolzens oder Pins an dem weiteren Verrieglungshebel (7) angeordnet ist, wobei das Befestigungsteil (3) eine Führungskulisse, insbesondere in Form eines Langlochs, zur begrenzt translatorischen Führung der sechsten Schwenkachse (G6) aufweist.

10. Befestigungssystem (S) nach einem der vorhergehenden Ansprüche, wobei das Befestigungsteil (3, 3a, 3b, 3c, 3d) ein Gehäuse (31, 31a, 31b, 31c, 31d) aufweist, in welchem der Kniehebelmechanismus (K) gelagert ist.

11. Befestigungssystem (S) nach Anspruch 10, wobei das Gehäuse (31, 31a, 31b, 31c, 31d) eine Anlagefläche (32, 32a, 32b) zur Anlage an dem Basisteil (1) aufweist, wobei der Verriegelungsabschnitt (41) des wenigstens einen Verriegelungshebels (4) in der Verriegelungsstellung aus dem Gehäuse (31, 31a, 31b, 31c, 31d) herausbewegt ist und in Normalenrichtung der Anlagefläche (32, 32a, 32b) über die Anlagefläche (32, 32a, 32b) hinwegragt, und in der Freigabestellung in das Gehäuse (31, 31a, 31b, 31c, 31d) hineinbewegt ist und nicht oder weniger weit über die Anlagefläche (32, 32a, 32b) hinausragt.

12. Befestigungssystem (S) nach Anspruch 10 oder 11, wobei das Gehäuse (31, 31b) einen Positioniervorsprung (33, 33b) aufweist, der zur Positionierung des Befestigungsteils (3, 3b) an dem Basisteil (1) in die Verriegelungsnut (2) eingreift.

13. Befestigungssystem (S) nach einem der Ansprüche 10 bis 12, wobei das Basisteil (1) eine längserstreckte Trägerschiene (10) ist, wobei das Gehäuse (31a) einen Hakenabschnitt (34a) aufweist, der zum Einhaken an einem Außenumfang der Trägerschiene (10) eingerichtet ist.

14. Lastenträger (T) für ein Fahrzeug mit einem Befestigungssystem (S) nach einem der vorhergehenden Ansprüche.

## Claims

1. A fastening system (S) for a load carrier (T), having
a base part (1) with a recessed locking groove (2) and
a fastening part (3, 3a, 3b, 3c, 3d) with at least one movable locking element (R) which is configured for positive interaction with the locking groove (2) to fasten the fastening part (3, 3a, 3b, 3c, 3d) to the base part (1),
wherein the fastening part (3, 3a, 3b, 3c, 3d) has a toggle lever mechanism (K) which comprises the locking element (R) in the form of a locking lever (4),
wherein the locking lever (4) is swivelable in a movement plane (E) of the toggle lever mechanism (K) and has a locking section (41) for positive interaction with the locking groove (2),
wherein the toggle lever mechanism (K) is configured for moving the locking section (41) between a locked position, in which the locking section (41) is moved into the locking groove (2) and interacts detachably and positively with the locking groove (2) to fasten the fastening part (3, 3a, 3b, 3c, 3d) to the base part (1), and a release position, in which the locking section (41) is moved out of the locking groove (2) and the positive connection is reversed for detachment of the fastening part (3) from the base part (1),
**characterized in that** the toggle lever mechanism (K) has a further locking lever (7) with a further locking section (71), wherein the further locking lever (7) is swivelable in the opposite direction to the locking lever (4), and wherein the two locking sections (41, 71) interact releasably and positively in the locked position with recesses (21, 22) of the locking groove (2) that are opposite another in the transverse direction of the locking groove (2).

2. The fastening system (S) according to claim 1, wherein the toggle lever mechanism (K) is extended past its dead-centre in the locked position, whereby the locking section (41) is releasably locked in the locked position.

3. The fastening system (S) according to claim 1 or 2, wherein the toggle lever mechanism (K) has an actuating lever (5) and a connecting lever (6) which are each swivelable in the movement plane (E), wherein the actuating lever (5) is configured for manual actuation and is operatively connected to the locking lever (4) by means of the connecting lever (6) in order to move the locking lever (4).

4. The fastening system (S) according to claim 3, wherein the actuating lever (5) is swivelable about a first swivel axis (G1) and the locking lever (4) is swivelable about a second swivel axis (G2), wherein the first swivel axis (G1) and the second swivel axis (G2) are stationary in relation to the fastening part (3), and wherein the connecting lever (6) is connected at one end to the actuating lever (5) swivelably relative to the actuating lever (5) about a third swivel axis (G3), and at the other end to the locking lever (4) swivelably relative to the locking lever (4) about a fourth swivel axis (G4), wherein the third swivel axis (G3) and the fourth swivel axis (G4) are translationally movable in relation to the fastening part (3) during a movement of the toggle lever mechanism (K).

5. The fastening system (S) according to any of the preceding claims, wherein the further locking lever (7) is pulled by the locking lever (4) and is connected to the locking lever (4) swivelably relative to the locking lever (4) about a fifth swivel axis (G5).

6. The fastening system (S) according to claim 5 and claim 4, wherein the fifth swivel axis (G5) is the fourth swivel axis (G4) and vice versa.

7. The fastening system (S) according to any of the preceding claims, wherein the further locking lever (7) is swivelable about a sixth swivel axis (G6), wherein the sixth swivel axis (G6) is stationary in relation to the fastening part (3), and wherein the further locking lever (7) is mounted on the sixth swivel axis (G6) with limited translational movability along its longitudinal axis relative to the sixth swivel axis (G6).

8. The fastening system (S) according to claim 7, wherein the further locking lever (7) has a slot (75) for limited translational mounting.

9. The fastening system (S) according to any of claims 1 to 6, wherein the further locking lever (7) is swivelable about a sixth swivel axis (G6), wherein the sixth swivel axis (G6) is stationary in relation to the locking lever (7), in particular wherein the sixth swivel axis (G6) in the form of a bolt or pin is arranged on the further locking lever (7), wherein the fastening part (3) has a guiding portion, in particular in the form of a slot, for limited translational guidance of the sixth swivel axis (G6).

10. The fastening system (S) according to any of the preceding claims, wherein the fastening part (3, 3a, 3b, 3c, 3d) has a housing (31, 31a, 31b, 31c, 31d) in which the toggle lever mechanism (K) is mounted.

11. The fastening system (S) according to claim 10, wherein the housing (31, 31a, 31b, 31c, 31d) has a contact surface (32, 32a, 32b) for contact with the base part (1) and wherein the locking section (41) of the at least one locking lever (4) is in the locked position moved out of the housing (31, 31a, 31b, 31c, 31d) and projects in the normal direction of the contact surface (32, 32a, 32b) beyond the contact surface (32, 32a, 32b), and is in the release position moved into the housing (31, 31a, 31b, 31c, 31d) and projects less far or not at all beyond the contact surface (32, 32a, 32b).

12. The fastening system (S) according to claim 10 or 11, wherein the housing (31, 31b) has a positioning projection (33, 33b) which engages in the locking groove (2) for positioning the fastening part (3, 3b) on the base part (1).

13. The fastening system (S) according to any of claims 10 to 12, wherein the base part (1) is an elongated carrier rail (10) and wherein the housing (31a) has a hooked section (34a) which is configured for hooking into an outer circumference of the carrier rail (10).

14. A load carrier (T) for a vehicle with a fastening system (S) according to any of the preceding claims.

## Revendications

1. Système de fixation (S) pour un porte-charges (T), présentant
un élément de base (1) avec une gorge de verrouillage en contre-dépouille (2) et
un élément de fixation (3, 3a, 3b, 3c, 3d) avec au moins un élément de verrouillage mobile (R) qui est configuré pour interagir par complémentarité de forme avec la gorge de verrouillage (2) afin de fixer l'élément de fixation (3, 3a, 3b, 3c, 3d) sur l'élément de base (1),
sachant que l'élément de fixation (3, 3a, 3b, 3c, 3d) présente un mécanisme de sauterelle (K) qui comprend l'élément de verrouillage (R) sous forme de levier de verrouillage (4),
sachant que le levier de verrouillage (4) est mobile par pivotement dans un plan de mouvement (E) du mécanisme de sauterelle (K) et présente une section de verrouillage (41) pour interagir par complémentarité de forme avec la gorge de verrouillage (2),
sachant que le mécanisme de sauterelle (K) est configuré pour déplacer la section de verrouillage (41) entre une position de verrouillage dans laquelle la section de verrouillage (41) est déplacée dans la gorge de verrouillage (2) et interagit de manière amovible et par complémentarité de forme avec la gorge de verrouillage (2) pour fixer l'élément de fixation (3, 3a, 3b, 3c, 3d) sur l'élément de base (1), et une position de libération dans laquelle la section de verrouillage (41) est sortie de la gorge de verrouillage (2) et dans laquelle la liaison par complémentarité de forme est supprimée afin de détacher l'élément de fixation (3) de l'élément de base (1),
**caractérisé en ce que** le mécanisme de sauterelle (K) présente un autre levier de verrouillage (7) avec une autre section de verrouillage (71), sachant que l'autre levier de verrouillage (7) est mobile par pivotement dans le sens inverse du levier de verrouillage (4), et sachant que dans la position de verrouillage, les deux sections de verrouillage (41, 71) interagissent de manière amovible et par complémentarité de forme avec les contre-dépouilles (21, 22) de la gorge de verrouillage (2), situées en face l'une de l'autre dans le sens transversal de la gorge de verrouillage (2).

2. Système de fixation (S) selon la revendication 1, sachant que le mécanisme de sauterelle (K) est étiré jusqu'à dépasser le point mort dans la position de verrouillage, si bien que la section de verrouillage (41) est bloquée de manière amovible dans la position de verrouillage.

3. Système de fixation (S) selon la revendication 1 ou 2, sachant que le mécanisme de sauterelle (K) présente un levier d'actionnement (5) et un levier de liaison (6) qui sont mobiles par pivotement respectivement dans le plan de mouvement (E), sachant que le levier d'actionnement (5) est configuré pour l'actionnement manuel et est en liaison active avec le levier de verrouillage (4) au moyen du levier de liaison (6) pour faire bouger le levier de verrouillage (4).

4. Système de fixation (S) selon la revendication 3, sachant que le levier d'actionnement (5) est mobile par pivotement autour d'un premier axe de pivotement (G1) et que le levier de verrouillage (4) est mobile par pivotement autour d'un second axe de pivotement (G2), sachant que le premier axe de pivotement (G1) et le second axe de pivotement (G2) sont fixes par rapport à l'élément de fixation (3), et sachant que le levier de liaison (6) est relié, à une première extrémité, au levier d'actionnement (5) de manière mobile par pivotement par rapport au levier d'actionnement (5) autour d'un troisième axe de pivotement (G3) et, à son autre extrémité, au levier de verrouillage (4) de manière mobile par pivotement par rapport au levier de verrouillage (4) autour d'un quatrième axe de pivotement (G4), sachant que le troisième axe de pivotement (G3) et le quatrième axe de pivotement (G4) sont mobiles en translation par rapport à l'élément de fixation (3), lors d'un mouvement du mécanisme de sauterelle (K).

5. Système de fixation (S) selon l'une des revendications précédentes, sachant que l'autre levier de verrouillage (7) est entraîné par le levier de verrouillage (4) et relié au levier de verrouillage (4) de manière mobile par pivotement par rapport au levier de verrouillage (4) autour d'un cinquième axe de pivotement (G5).

6. Système de fixation (S) selon la revendication 5 et la revendication 4, sachant que le cinquième axe de pivotement (G5) est le quatrième axe de pivotement (G4) et inversement.

7. Système de fixation (S) selon l'une des revendications précédentes, sachant que l'autre levier de verrouillage (7) est mobile par pivotement autour d'un sixième axe de pivotement (G6), sachant que le sixième axe de pivotement (G6) est fixe par rapport à l'élément de fixation (3), et sachant que l'autre levier de verrouillage (7) est monté sur le sixième axe de pivotement (G6) de sorte à être mobile en translation de manière limitée le long de son axe longitudinal par rapport au sixième axe de pivotement (G6).

8. Système de fixation (S) selon la revendication 7, sachant que l'autre levier de verrouillage (7) présente un trou oblong (75) permettant un déplacement en translation limité.

9. Système de fixation (S) selon l'une des revendications 1 à 6, sachant que l'autre levier de verrouillage (7) est mobile par pivotement autour d'un sixième axe de pivotement (G6), sachant que le sixième axe de pivotement (G6) est fixe par rapport au levier de verrouillage (7), sachant notamment que le sixième axe de pivotement (G6) est disposé sous forme de boulon ou de goupille sur l'autre levier de verrouillage (7), sachant que l'élément de fixation (3) présente une coulisse de guidage, notamment sous forme de trou oblong, pour le guidage en translation limitée du sixième axe de pivotement (G6).

10. Système de fixation (S) selon l'une des revendications précédentes, sachant que l'élément de fixation (3, 3a, 3b, 3c, 3d) présente un boîtier (31, 31a, 31b, 31c, 31d) dans lequel est monté le mécanisme de sauterelle (K).

11. Système de fixation (S) selon la revendication 10, sachant que le boîtier (31, 31a, 31b, 31c, 31d) présente une surface d'appui (32, 32a, 32b) destinée à l'appui sur l'élément de base (1), sachant que la section de verrouillage (41) dudit au moins un levier de verrouillage (4) est sortie du boîtier (31, 31a, 31b, 31c, 31d) dans la position de verrouillage, et dépasse de la surface d'appui (32, 32a, 32b) dans la direction normale de la surface d'appui (32, 32a, 32b), et est enfoncée dans le boîtier (31, 31a, 31b, 31c, 31d) dans la position de libération et ne dépasse pas ou reste en deça de la surface d'appui (32, 32a, 32b).

12. Système de fixation (S) selon la revendication 10 ou 11, sachant que le boîtier (31, 31b) présente une saillie de positionnement (33, 33b) qui s'engage dans la gorge de verrouillage (2) pour le positionnement de l'élément de fixation (3, 3b) sur l'élément de base (1).

13. Système de fixation (S) selon l'une des revendications 10 à 12, sachant que l'élément de base (1) est un rail support (10) s'étendant longitudinalement, sachant que le boîtier (31a) présente une section à crochet (34a) qui est configurée pour s'accrocher dans une circonférence extérieure du rail support (10).

14. Porte-charges (T) pour un véhicule avec un système de fixation (S) selon l'une des revendications précédentes.
